# EUROPEAN PATENT APPLICATION

(11) **EP 2 206 801 A1**
(43) Date of publication of application: **14.07.2010**
(21) Application number: 08172937.8
(22) Date of filing: 24.12.2008
(51) Int. Cl.: C23C 18/12

(54) **Composite cookware comprising a vitreous protective coating**

(71) Applicant: SEB SA, 69130 Ecully (FR)
(72) Inventor: Berrux Aurelien, 73290 La Motte Servolex (FR); Barcikowski Gaelle, 74150 RUMILLY (FR)
(74) Representative: Somnier, Jean-Louis

(57) **Abstract**

The present invention relates to a composite cookware for food preparation, comprising a metallic composite support element, the outer surface of which is covered by a vitreous protective coating. The present invention also relates to a process for manufacturing such a cookware.

## Description

The present invention relates to a composite cookware for food preparation, comprising a metallic composite support element, the outer surface of which is covered by a vitreous protective coating. The present invention also relates to a process for manufacturing such a cookware.

Organic paints are often used as decorative coatings on the outer surface of a cookware. However, the use of organic paints suffers from the major drawback that they can only be applied on the side wall of the cookware, since the contact of organic paints with a heat source is proscribed.

Vitreous coatings such as enamel coatings are often used for protecting metal substrates such as steel. However, enamels coating are generally produced by processes involving a heating step to firing temperature that is generally higher than 800°C for enamelling steel substrates.

Thus, it is no possible to use the enamels generally used on steel substrates for enamelling the stainless steel layer of a multiply metal support which also comprises an aluminum layer, since aluminum has a melting temperature of about 660°C.

By aluminum, it is meant in the present invention pure aluminum or an aluminum alloy.

One solution to this problem posed is therefore to propose a vitreous protective coating, which process involves a heat treatment to be carried up to an end temperature below 650°C.

It is known from US 6,162,498 and US 2008/0118745 a process for providing a metallic surface with a vitreous layer, which is decorative, scratch resistant and corrosion inhibiting. Said process comprises:
- the preparation of a coating composition by hydrolising and polycondensing one or more silanes in the presence of micronized SiO₂ particles and at least one compound selected from the group consisting of the oxides and hydroxides of the alkali and alkaline earth metals,
- the application of the coating composition to the metallic surface to form a coating, and
- the thermally densification of the coating to form a vitreous layer, this step being preferably preceded by a drying operation.

In the process of US 6,162,498, the thermal densification consists in curing the coating at an end temperature ranging from 350°C to 500°C, in the case of stainless steel substrates.

It is also known from US 2008/0118745 metallic substrates such as steel or aluminum having a deformable glass-type coating, obtainable by a process comprising:
a) the application of an alkali metal silicate-containing coating sol to the substrate, to provide a coating layer, and
b) the thermal densification of the coating layer by a two-stage heat treatment, preferably at en end temperature of up to about 500°C.

In the first stage, the heat treatment is carried out either in (A) an oxygen-containing atmosphere, preferably at an end temperature of up to about 400°C, or (B) in a vacuum at a residual pressure lower than 15 mbar, preferably in an inert gas atmosphere. In the second stage, the heat treatment is preferably carried out at an end temperature in a range of from 400°C to 600°C.

In US 6,162,498 and in US 2008/0118745, the metallic surfaces to be coated are surfaces consisting or comprising a metal (such as aluminum) or a metal alloy (such as steel, notably stainless steel and aluminum alloys).

However, nothing is said in US 2008/0118745 and US 6,162,498 relative to multiply composite substrates comprising an outer layer of stainless steel and at least one inner layer of a metal or a metal alloy having a melting temperature lower than 650°C (such as aluminum or aluminum alloy), nor relative to the problems encountered by such substrates when they are provided with a vitreous layer obtained by the sol-gel route. Indeed, a multiply metal composite support has the drawback of warping during use, due to the differences in thermal expansion properties of the different bonded materials of the composite support. This thermal effect may cause a fine stress cracking of the vitreous coating deposited on the stainless steel layer of the composite element.

The problem posed by this invention is therefore to remedy to the above-mentioned drawback, by proposing a composite cookware comprising a vitreous coating adapted to a composite element support made of a stainless steel layer and a layer of a metal or metal alloy having a melting point lower than 650°C.

One solution to this problem is a composite cookware for a food preparation, comprising a hollow support element defining a bottom and a side wall rising from the bottom, said support having an inner surface intended to be oriented towards the food to be disposed in the cookware and an outer surface intended to be oriented downwardly towards a heat source, said outer surface (22) being overlaid by a protective coat;
**characterized in that**:
- the protective coat is a continuous film having a thickness of at least 10 µm and made up of a sol-gel material, comprising a matrix of at least one polyalcoxysilane and at least one metal oxide dispersed in said matrix, said sol-gel material having a coefficient of expansion α, which ranges from 50.10⁻⁷ to 100.10⁻⁷ K⁻¹;
- said support element is a composite element comprising an outer layer of stainless steel having said outer surface, and at least an inner layer of a metal or a metal alloy having a melting temperature lower than 650°C, said inner layer being bonded to the outer layer of stainless steel.

By cookware, it is meant in the present invention all types of food preparation containers commonly found in the kitchen, notably cooking vessels such as saucepans and frying pans intended for use on a stove or range cooktop, and also cooking vessels intended for use inside an oven (bakeware).

The vitreous protective coating of the invention is durable, and thus, does not need to be often changed.

The vitreous coating of the invention also presents the advantage to be well adapted to composite element supports, since its coefficient of expansion is only slightly lower than that of the outer stainless steel layer of the composite element support. Thus, the vitreous coating is slightly compressed on the outer stainless steel layer, which reduces notably the risk of forming fine cracks or crazing on said vitreous coating and enhances the quality of this coating.

Furthermore, if the vitreous coating of the invention must contain a red pigment, it is possible to use a mineral pigment, since such a pigment can lead to a vitreous coating having a red colour similar to that traditionally obtained with cadmium pigments for colouring ceramic glazes and glass. However, cadmium pigments present the major drawback to be toxic. On the contrary, the red mineral pigment contained in the vitreous coating of the invention is not toxic and completely safe for the environment.

Preferably, the metal oxide is a micronized oxyde.

In a presently preferred embodiment of the present invention, the inner layer of the support element is a layer of pure aluminum or aluminum alloy. In such an embodiment, the composite element is thus constituted by a stainless steel layer bonded to a layer of aluminum or aluminum layer. This embodiment allows an excellent heat distribution and conductivity properties, and thus provides a thermally efficient and durable cookware.

In a further presently preferred embodiment, the inner layer of the support element is further bonded to a second layer of stainless steel. Then, in the particular case of a support element being a multiply-composite element in which the outer layer completely covers the inner layer (including the side wall of the support element), said inner layer is thus a core layer sandwiched between two layers of stainless steel. This embodiment enhances the above-mentioned properties of heat distribution and conductivity.

In another presently preferred embodiment of the present invention, the outer stainless steel layer of is a ferromagnetic grade, preferably a ferritic grade, adapted to render the cookware suitable for an induction heating.

Within this context of an outer stainless steel layer being a ferromagnetic grade, the outer layer may also be a plate centred on the bottom of the cookware and only covering the portion of the inner layer defined by said bottom.

Then, the cookware of the invention has an improved scratch resistance as well as improved resistance to detergents used in dishwashers.

Another goal of the present invention consists in proposing a method for manufacturing a composite cookware for a food preparation, which enables the realization of a dense enamel type coating on the stainless steel layer of a composite support which further comprises an inner layer of aluminum (or aluminum alloy), by avoiding a heat treatment at temperatures higher than the melting point of aluminum.

For this, there is provided a method for manufacturing a composite cookware for a food preparation, the method including:
■ providing a hollow support element defining a bottom and a side wall rising from said bottom, this support element having an inner surface intended to be oriented towards the food to be disposed in the cookware and an outer surface intended to be downwardly oriented towards a heat source;
■ preparing a coating composition;
■ coating at least a portion of the outer surface of the support element with the coating composition, to form a green protective coating on said outer surface; and
■ thermally densifying the green protective coating, to form a transparent vitreous protective coating on said outer surface;
**characterized in that :**
■ the metal support element is a multi-ply composite element comprising an outer layer of stainless steel having said outer surface, and an inner layer of a metal or a metal alloy having a melting temperature below 650°C, said inner layer being bonded to said outer;
■ the coating composition is prepared by a process comprising hydrolyzing and polycondensing at least one silane of the general formula:

   RₙSiX₄₋ₙ
where:
■ each R, which are the same or different, is hydrogen or an optionally fluorinated alkyl, alkenyl, or alkynyl group having up to 12 carbon atoms, or an optionally fluorinated aryl, aralkyl, or alkaryl group having 6 to 10 carbon atoms,
■ each X, which are the same or different, is a hydrolysable group or a hydroxyl group, and
■ n is 0,1 or 2, provided that at least one silane has n = 1 or 2, or one or more oligomers derived therefrom, in the presence of at least one metal oxide and at least one melting agent selected in the group consisting of the ethoxides oxides and hydroxides of the alkali and alkaline earth metals and the boron trimethoxide wherein the weight ratio of the total Si in the silanes to the melting agent is between 5 and 20 ; and
■ the step of thermally densifying the protective coating is carried out at an end temperature ranging between 400°C and 600°C, preferably between 450°C and 500°C.

The outer layer may be a plate, preferably of ferromagnetic grade, centred on the bottom of the cookware. Then, in this particular case, the plate may be applied by stamping to the inner layer.

Other advantages and particular features of the invention will emerge from the description that follows, and which is provided with reference to the appended figures, in which:
- figure 1 represents a cross-sectional schematic view of a culinary item according to a first variant of the invention,
- figure 2 represents a cross-sectional schematic view of a culinary item according to a second variant of the invention, and
- figure 3 represents a cross-sectional schematic view of a culinary item according to a third variant of the invention,

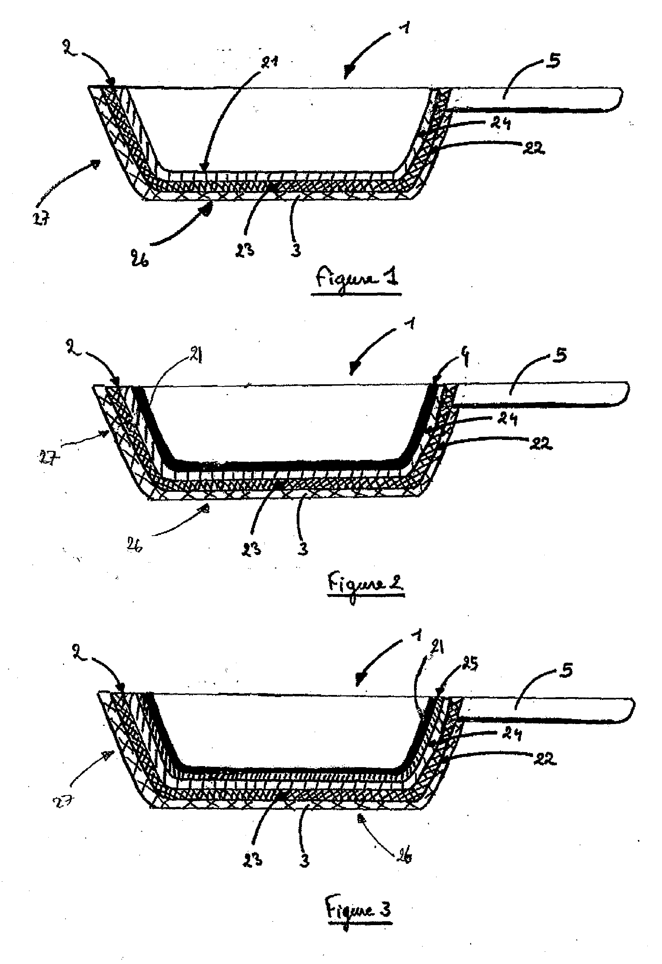

Elements common to figures 1 to 3 are identified by the identical numerical references.

In figures 1 to 3, there is shown, by way of illustration, a frying pan 1. This frying pan 1, includes a gripping handle 5 for grasping and one piece support element 2, comprising a bottom 26 and lateral wall 27 rising up from said bottom 26. The support element 2 includes an inner surface 21 which is intended to be oriented towards the food to be disposed in the cookware, and an outer surface 22, which is intended to be oriented towards a heat source (such a burner).

Referring now more particularly to the support element 2, it is a multiply-composite support comprising a very thin layer 23 of stainless steel comprising the outer surface 22, and a thicker layer of aluminum 24 bonded to the stainless steel layer 21. The stainless steel layer 23 may be a ferromagnetic grade (preferably a ferritic grade) or an austenitic stainless steel, although a ferromagnetic grade is preferred if the frying-pan 1 is to be induction heated.

The aluminum layer 24 may be pure aluminum, Alclad aluminum or aluminum alloys chosen from 3003 aluminum alloy, 4006 aluminum alloy and 4700 aluminum alloy.

The outer layer 23 of stainless steel, which has preferably either a brushed or a sandblasted finish on the outer surface 22, is at least partially covered by a protective coat 3. Preferably, this protective coat covers the entire outer surface 22 of the support element 2, namely the stainless-steel layer 23.

According to the present invention, the protective coat 3 is in the form of a continous film of s sol-gel material having a thickness of at least 10 µm, and preferably between 10 µm and 15 µm.

This sol-gel material comprises a matrix of at least one polyalcoxysilane and at least one metal oxide, which is dispersed in the polyalcoxysilane matrix.

Suitable sol-gel materials to be applied to the outer surface 22 of the surface element are sol gel materials which must have an expansion coefficient α ranging from 50.10⁻⁷ to 100.10⁻⁷ K⁻¹.

As metal oxides which can be used in the sol-gel material in accordance with the present invention, mention may be made of silica, alumina, zircon oxide, vanadium oxide, and cerium oxide. Particular mention may be made of silica.

The sol-gel material in accordance with the present invention may also contain one or more mineral pigments, which may be advantageously in the form of micronized or submicronized pigments.

As mineral pigments that can be used in the sol-gel material of the invention mention may be made of metal oxides, spinels, flakes of mica or flakes of alumina in which said flakes are covered by metal oxides. A preferred pigment of the invention is the red mineral pigment IRIODIN® of the MERCK Company.

Of the metal oxides that may be used as pigments in the protective coat of the invention, mention should be particular made of titanium oxide (TiO₂) and/or iron oxide (Fe₂O₃).

Of the flakes that may be used as pigments in the protective coat, mention should be particular made of the flakes covered by metal oxides such as oxides of zircon, titanium or zinc.

Referring now to figure 2, the frying pan 1 illustrated in this figure further comprises a non-stick layer 4 applied to the inner surface 21 of the support element 2.

This non-stick layer may advantageously be constituted by a coating comprising a sintered network of at least one thermostable resin withstanding a temperature of at least 200°C.

As thermostable resins withstanding a temperature of at least 200°C that may be used in the present invention, mention should be made of fluorocarboned resins, that may be used alone or blended with one or more other thermostable resins withstanding a temperature of at least 200°C, such as silicone resins.

Of the fluorocarboned resins that may be used in the present invention, mention should be particular made of polytetrafluoroethylene (PTFE), tetrafluoroethylene perfluoropropylvinylether copolymer (PFA) or tetrafluoroethylene-hexafluoropropylene copolymer (FEP) or a blend of these fluorocarboned resins.

The other thermostable resins whithstanding to at least 200°C may be a polyamide imide (PAI), a polyethylene sulfone (PES), a polyphenylene sulphide (PPS), a polyetherketone (PEK), a polyetheretherketone (PEEK) or a silicone.

In the alternative illustrated in figure 3, the support element 2 comprises 3 bonded layers, disposed as follows:
■ an outer layer 23 of stainless steel, comprising the outer surface 22 of the support element 2,
■ a core layer 24 of pure aluminum o aluminum alloy, and
■ an inner layer 25 of stainless steel.

The stainless-steel outer layer 23 is as described above and similar to the stainless steel layer 23 of the embodiments illustrated in figures 1 and 2.

In a similar manner, the core layer 24 of pure aluminum or aluminum alloy is that described above and similar to the aluminum inner layer 24 of the embodiments illustrated in figures 1 and 2.

The stainless-steel inner layer 25 of the composite support element 22, illustrated in figure 3, is preferably an austenitic grade, preferably in the 300 series (such as type 304).

The method of the invention for producing a culinary item 1 for a food preparation will now be detailed.

This method includes the following consecutive steps read in reference to figures 1 and 3:
■ providing a multiply composite support element 2 defining an inner surface 21 intended to be oriented the food to be disposed in the cookware 1, and an outer surface 22 intended to be downwardly oriented towards a heat source, the support element 2 comprising an outer layer 23 of stainless steel having said outer surface 22, and an inner layer 24 of a metal or a metal alloy having a melting temperature below 650°C;
■ preparing a coating composition;
■ applying to at least a portion of the outer surface 22 of the support element 2 the coating composition, to form a green protective coating 4 on said outer surface 22; and
■ thermally densifying the green protective coating 3, to form a transparent vitreous protective coating 4 on said outer surface 22.

By green coating, it is meant in the present invention, a non cured coating.

As already indicated above, the outer layer of stainless steel of the embodiments illustrated in figures 1 to 3 comprises the outer surface 22 of the support element 2. Said outer surface 22 of the support element 2, which is covered at least partially by the protective coat 3, functions as the heat-source contacting surface.

As regards the embodiment illustrated in figure 1, the support element 2 is a biply composite element constituted by the outer layer 23 of stainless steel and one inner layer 24 of pure aluminum or aluminum alloy. Thus, in this embodiment, the layer 24 of aluminum (pure or alloyed) comprises the inner surface 21 of the biply composite element 2, which functions as the food contacting surface.

As regards the embodiment illustrated in figure 3, the support element 2 is a three-ply composite element constituted by the outer layer 23 of stainless steel, one core layer 24 of aluminum (pure or alloyed) bonded to the outer layer 23, and an inner layer 25 of stainless steel bonded to the inner aluminum layer 24. Thus, the second stainless-steel layer 25 comprises the inner surface 21 of the triply composite element 2, which functions, as indicated above, as the food contacting surface.

In the embodiment, illustrated in figures 1 and 3, the different metal layers of the composite support element 2 are as described above.

According to the method of the invention, the preparation of the coating composition comprises hydrolyzing and polycondensing at least one silane of the general formula:

RₙSiX₄₋ₙ

where:
■ each R, which are the same or different, is hydrogen or an optionally fluorinated alkyl, alkenyl, or alkynyl group having up to 12 carbon atoms, or an optionally fluorinated aryl, aralkyl, or alkaryl group having 6 to 10 carbon atoms,
■ each X, which are the same or different, is a hydrolysable group or a hydroxyl group, and
■ n is 0,1 or 2, provided that at least one silane has n = 1 or 2, or one or more oligomers derived therefrom, in the presence of at least one metal oxide and at least one melting agent selected in the group consisting of the oxides and hydroxides of the alkali and alkaline earth metals and the boron trimethoxide, wherein the weight ratio of the total Si in the silanes to the melting agent is between 5 and 20.

Preferably, the metal oxide is a micron-oxide.

Prior to the application of the coating composition, the portion of the outer surface 22, that is intended to be overlaid by said coating composition, is preferably thoroughly cleaned (particularly free of grease and dust), and then carried out by a prior mechanical or chemical treatment.

Advantageously, the surface treatment is a mechanical one, such as brushing or sandblasting the outer surface 22 of the support element 2, for roughening the outer surface 22 and reaching a roughness Ra ranging from 1 to 8 µm. Such a roughness does not modify the final aspect of the coating, while enabling a better adhesion of the vitreous coating 3 on the support element 2.

The preparation of the coating composition comprises hydrolysing and polycondensing of at least one silane of the general formula (I). In this formula, the groups X, which may be the same or different from each other, represent hydrolysable groups or hydroxyl groups. Specific examples of hydrolysable groups X are halogen atoms (particularly chlorine and bromine), alkoxy groups and acyloxy groups having up to 6 carbon atoms. Particularly preferred are alkoxy groups, especially C₁-C₄ alkoxy groups such as methoxy, ethoxy and n- and i-propoxy. Preferably the groups X in a specific silane are identical, methoxy or ethoxy groups being preferably employed.

The groups R in general formula (I) which for n=2 may be the same or different represent hydrogen, alkyl, alkenyl and alkynyl groups having up to 12 (generally up to 8 and preferably up to 4) carbon atoms and aryl, aralkyl and alkaryl groups having 6 to 10 carbon atoms.

Specific examples of such groups are methyl, ethyl, propyl and butyl, vinyl, allyl and propargyl, phenyl, tolyl, benzyl and naphthyl. Usually the groups R are unsubstituted.

Preferred groups R are (unsubstituted) alkyl groups having 1 to 4 carbon atoms, especially methyl and ethyl, as well as phenyl.

According to the present invention, it is preferred to employ at least two silanes of the general formula (I). Such mixtures of silanes comprise, for example, at least one alkyltrialkoxy silane (e.g. (m)ethyltri(m)ethoxy silane or MTMS) and at least one tetraalkoxy silane (e.g. tetraethoxy silane TEOS).

The metal oxide particles, which may be employed in the method of the invention in addition to the hydrolyzable silanes of the general formula (I), are similar to those described above. As already mentioned above, it may, however, be advantageous to employ micronized SiO₂ or Al₂0₃ particles, and preferably micronized SiO₂ particles.

Such micronized SiO₂ particles may for example be employed in the form of commercially available silica sols, that are notably obtainable from the company CLARIANT under the trade name KLEBOSOL, and from the company GRACE DAVISON under the trade name LUDOX.

It is assumed that the presence of metal oxides particles in the coating is of essential importance for achieving sufficient layer thicknesses.

In addition to the presence of said metal oxide particles, the hydrolysis and polycondensation of the silane(s) of the general formula (I) may be carried out in the presence of at least one melting agent.

As examples of melting agents that may be used in the present invention, mention may be made of compounds from the group of the methanoates (or formates) of alkali and alkaline earth metals, and boron trimethoxide (TMB), and their mixtures.

Said methanoates are preferably those of Li, Na, K, Mg, Ca and/or Ba. The use of alkali metal formates, especially of Na and K, is particularly preferred.

In the method of the invention, hydrolysis and polycondensation of the silanes of the general formula (I) take preferably place in an alkaline medium, which is advantageous especially in the case where metallic surfaces, which are not or only slightly resistant to the attack by acids (e.g. made of steel), are to be provided with a vitreous coating 3 according to the present invention.

The hydrolysis and polycondensation of the silanes of the general formula (I) may be carried out in the presence or absence of an organic solvent. When using an organic solvent, the starting components are preferably soluble in the reaction medium (which usually includes water). Thus, the organic solvents that may be used the method of the present invention are water-miscible solvents such as mono- or polyhydric alcohols (e.g. methanol, ethanol, and isopropyl alcohol), and glycols (e.g. hexylene glycols).

Other compounds, which function as chain-transfert agents (also usually called modifiers or regulators*)* may also optionally be added to the coating composition of the invention, in order to provide a viscosity which is suitable for the coating operation. As examples of chain-transfert agents which may be used in the coating composition of the invention, polyvinyl alcohol, silicone polyester resins, ethyl cellulose and waxes are mentioned particularly. These chain-transfert agents are to be removed during the step of thermally densifying the green protective coating.

Advantageously, it is also possible to incorporate one or more mineral pigment(s) directly into the coating composition to be employed according to the present invention, for providing a colored vitreous protective 3 layer on the outer surface 22 of the support element 2. Said mineral pigment(s) are similar to those described above.

Otherwise, hydrolysis and polycondensation may be carried out according to modalities known to the skilled person.

As regards now the step of applying the coating composition of the invention on the outer surface 22 of the support element 2 (or on a portion of said outer surface 22, only), the coating composition may be applied according to conventional coating methods, spraying and screen printing.

The green protective coating 3 thus obtained generally have a thickness of at least 10 µm, preferably from 10 to 20 µm.

Said green coating 3 applied on at least a portion of the outer surface 22 will subsequently be thermally densified to form a vitreous layer.

Prior to said thermal densification, a conventional drying operation of the green protective coating 3 at room temperature and/or at slightly elevated temperature (e.g. at a temperature of up to 100°C, notably 80°C) may be carried out.

According to the method of the invention, the thermally densification of the green or dried protective coating 3 is then carried out in a vacuum oven and comprises three steps:
- heating the frying pan 1 in air atmosphere (or under nitrogen atmosphere) at a heating rate of 5 K/minute to 30 K/minute, preferably at 8 K/minute, to an end temperature ranging between 400 and 600°C, preferably ranging between 450°C and 500°C, and more preferably about 480°C.
- holding the frying pan 1 at said end temperature for at least two hours, and then
- cooling the frying pan 1 at a rate of approximately 5 to 20 K/minute, preferably in this atmosphere, until removal from the oven.

It is recommended to carry out said thermal densification in a oxygen-free atmosphere, e.g. under nitrogen or argon, for avoiding oxidation of the non covered portions of the outer surfaces 22.

However, if the entire outer surface 22 is overlaid by the green protective coating 3, the oxygen free atmosphere is not necessary.

It remains to be noted that the thermal densification may optionally also be effected by IR or laser radiation. Also, it is possible to produce structured coatings by selective action of heat thereon.

According to the present invention, the thickness of the vitreous layer 3 (e.g. the baked protective coating 3) obtained after the thermal densification preferably ranges from 10µm to 15 µm.

Referring now to figure 2, the method of the present invention may advantageously comprise a step of applying and sintering a non-stick coating composition to the inner surface 21 of the support element 2, to provide a non stick coating 4 on said inner surface 21.

This non-stick coating is similar as those described above.

The examples which follow illustrate the invention without restricting it.

### Test

**Corrosion test :** The aspect, notably the discolouration of the vitreous coating is evaluated after 100 cycles of washings in a dishwasher using commercial detergents, like those provided by the Procter and Gamble Company under the trade name CASCADE®.

### EXAMPLE 1:

**Three-ply composite element, the outer surface of which is overlaid by a protective coating according to the invention.**

### a) Preparation of a coating sol

### Chemicals used:

■ 20% to 40% by weight of tetraethoxysilane (TEOS);
■ 40% to 50% by weight of methyltrimethoxysilane;
■ 2 l to 4 l of silica sol, with a content of SiO₂ between 10% and 40% ;
■ 0% to 40% by weight of micronized SiO₂ particles;
■ 0% to 5% by weight of boron trimethoxide (TMB);
■ 0% to 5% by weight of sodium ethoxide;
■ 0% to 5% by weight of potassium ethoxide;
■ 0% to 5% by weight of sodium formate;
■ 0% to 5% by weight of potassium formate;
■ 0% to 5% by weight of aluminum acetylacetonate;
■ 20% to 50% of ethanol, propanol, butylylycol, or hexyleneglycol;
■ Sodium hydroxide;
■ Anti-settling agents, surface modifiers, rheologic additives;
■ A red mineral pigment IRIODIN® of the MERCK Company.

The silanes are initially charged and the silica sol added with vigorous stirring. Then, the sodium hydroxide is added at the start of the hydrolysis, at room temperature until all sodium hydroxide has dissolved and a clear solution is formed.

The pigments and the melting agent are then introduced.

Subsequently, water is slowly added dropwise at room temperature, resulting in a rise of the temperature of the solution.

After cooling to room temperature, it is filtered through a filter. The sol thus produced can be adjusted to a derived viscosity with a modifier.

### b) Coating of a triply composite element 2

The coating sol obtained in section a) is applied in a spraying process to the sandblasted outer surface 22 of the surface element 2 which is illustrated in figure 3.

After drying at room temperature, the coated element surface 2 is thermally densified in a forced air oven as follows:
- first step: heating up to 480°C at a heating rate of 10 K/min;
- second step: hold time of at least four hours;
- third step: cooling to room temperature at approximately 8 K/minute until removal from the oven.

The coating thus produced has a very uniform red colour and presents an improved scratch-resistance measured by a hardness of 5 Mohs, and exhibits a discolouration below 5% as a proof of a high resistance to detergents used in the dishwashers (corrosion resistance).

### COMPARATIVE EXAMPLE 1

**Three-ply composite support element 2, the outer surface of which is overlaid by a conventional enamel.**

A conventional enamel, which is suitable for an application to a stainless-steel substrate, is applied by a spraying process to the outer surface 22 of the surface element 2, which is illustrated in figure 3.

The enamel coating thus produced presents a hardness of 5 Mohs]. However, the enamel is thermally densified by heating up to 800°C or more, which necessarily leads to the melting of the core aluminium layer 24.

### COMPARATIVE EXAMPLE 2

**Three-ply composite support element, the outer surface of which is overlaid by a conventional paint.**

A conventional paint is applied to the sandblasted outer surface 22 of the surface element 2.

This coating presents a corrosion resistance similar to that obtained with the vitreous coating of example 1 and a hardness in the range of 3-4 Mohs. However, the direct contact of this covered three-ply support element is proscribed.

## Claims

1. A composite cookware (1) for a food preparation, comprising a hollow support element (2), defining a bottom (11) and a side wall (12) rising from said bottom (11), said support element (2) having an inner surface (21) intended to be oriented towards the food to be disposed in the cookware (1) and an outer surface (22) intended to be oriented downwardly towards a heat source, said outer surface (22) being overlaid by a protective coat (3);
**characterized in that**:
- said protective coat (3) is a continuous film having a thickness of at least 10 µm and made up of a sol-gel material, comprising a matrix of at least one polyalcoxysilane and at least one metal oxide dispersed in said matrix, said sol-gel material having a coefficient of expansion α, which ranges from 50.10⁻⁷ to 100.10⁻⁷ K⁻¹;
- said support element (2) is a composite element comprising an outer layer (23) of stainless steel having said outer surface (22), and at least an inner layer (24) of a metal or a metal alloy having a melting temperature below 650°C, said inner layer (24) being bonded to the outer layer (23) of stainless steel.

2. The cookware according to claim 1, wherein the inner layer (23) is a layer of pure aluminum or aluminum alloy.

3. The cookware according to claim 1 or 2, wherein the inner layer (24) is further bonded to a second layer (25) of stainless steel.

4. The cookware according to anyone of claims 1 to 3, wherein the outer layer (23) of stainless steel is a ferromagnetic grade, adapted to render the cookware (1) suitable for an induction heating.

5. The cookware according to any one of claims 1 to 4, wherein the support element (2) is a multiply-composite element, in which the outer layer (23) completely covers the inner layer (24).

6. The cookware according to claim 4, wherein the outer layer (23) is a plate centred on the bottom (11) and only covering the portion of the inner layer (24) defined by said bottom (11).

7. The cookware according to anyone of claims 1 to 6, wherein the outer layer (23) of stainless steel has either a brushed or a sandblasted finish on the outer surface (22).

8. The cookware of anyone of claims 1 to 7, wherein the protective coat (3) has a thickness between 10 µm and 15 µm.

9. The cookware of anyone of claims 1 to 7, wherein the metal oxide of the sol-gel material is chosen among silica, aluminum, zircon oxide, vanadium oxide, and cerium oxide.

10. The cookware of anyone of claims 1 to 9, wherein the protective coat (3) comprises at least one mineral pigment.

11. The cookware of claim 10, wherein the pigment is a micronized or a submicronized pigment.

12. The cookware of claim 10 or 11, wherein the pigment is chosen among metal oxides, spinels, flakes of mica or flakes of alumina in which said flakes are covered by metal oxides.

13. The cookware of claim 12, wherein the metal oxide pigment is titanium oxide (TiO₂) and/or iron oxide (Fe₂O₃).

14. The cookware of claim 12, wherein the metal oxides covering the flakes of mica or the flakes of aluminum are chosen among the oxides of zircon, titanium and tin.

15. The cookware of anyone of claims 1 to 14, wherein the inner surface (21) of the support element (2) is innerly overlaid by a non-stick layer (4) applied thereto.

16. The cookware of claim 15, wherein the non-stick layer (4) comprises a sintered network of at least one thermostable resin withstanding a temperature of at least 200°C.

17. The cookware of claim 16, wherein the thermostable resin is a silicone resin or a fluorocarbon resin.

18. A method for manufacturing a composite cookware for a food preparation, the method including:
■ providing a hollow support element (2) defining a bottom (11) and a side wall (12) rising from said bottom (11), said support element (2) having an inner surface (21) intended to be oriented towards the food to be disposed in the cookware (1) and an outer surface (22) intended to be downwardly oriented towards a heat source;
■ preparing a coating composition;
■ coating at least a portion of the outer surface (22) of the support element (2) with the coating composition, to form a green protective coating (4) on said outer surface (22); and
■ thermally densifying the green protective coating (3), to form a transparent vitreous protective coating (4) on said outer surface (22);
**characterized in that :**
■ the metal support element is a composite element comprising an outer layer (23) of stainless steel having said outer surface (22), and an inner layer (24) of a metal or a metal alloy having a melting temperature below 650°C, said inner layer (24) being bonded to said outer (23);
■ the coating composition is prepared by a process comprising hydrolyzing and polycondensing at least one silane of the general formula:
RnSiX₄₋ₙ
where:
■ each R, which are the same or different, is hydrogen or an optionally fluorinated alkyl, alkenyl, or alkynyl group having up to 12 carbon atoms, or an optionally fluorinated aryl, aralkyl, or alkaryl group having 6 to 10 carbon atoms,
■ each X, which are the same or different, is a hydrolysable group or a hydroxyl group, and
■ n is 0,1 or 2, provided that at least one silane has n = 1 or 2, or one or more oligomers derived therefrom, in the presence of at least one metal oxide and at least one melting agent selected in the group consisting of the oxides and hydroxides of the alkali and alkaline earth metals and the boron trimethoxide wherein the weight ratio of the total Si in the silanes to the melting agent is between 5 and 20 ; and
■ the step of thermally densifying the protective coating is carried out at an end temperature ranging between 400 and 600°C.

19. The method according to claim 18, wherein the outer layer (23) is a plate centred on the bottom (11) of the cookware and covering the portion of the inner layer (24) defined by said bottom (11), said plate being applied to the inner layer (24) by stamping, said stamping step being carried out before the step of coating the outer surface (22) with the coating composition.

20. The method according to claim 18 or 19, wherein the end temperature of the step of thermally densifying the protective coating ranges between 450°C and 500°C.

21. The method according to any one of claims 18 to 20, wherein the metal oxide is SiO₂ or Al₂O₃.

22. The method according to anyone of claims 18 to 21, wherein the or each X is alkoxy, preferably methoxy or alkoxy.

23. The method according to claim 22, wherein said at least one silane is chosen among methyltrimethoxysilane (MTMS), methytriethoxysilane (MTEOS), ethyltrimethoxysilane, ethyltriethoxysilane, tetramethoxysilane and tetraethoxysilane (TEOS).

24. The method according to anyone of claim 18 to 23, wherein the melting agent is selected from sodium formate, potassium formate, boron trimethoxide (TMB), and their mixtures.

25. The method according to anyone of claims 18 to 24, wherein the coating composition comprises at least one mineral pigment for providing a coloured vitreous protective layer on the outer surface (22) of the support element, preferably a submicron pigment.

26. The method according to anyone of claims 18 to 25, further comprising a step of brushing or sandblasting the outer surface (22) of the support element (2), before applying the coating composition.

27. The method according to anyone of claims 18 to 26, further comprising applying and sintering a non-stick coating composition to the inner surface (21) of the support element (2), to provide a non stick coating (4) on said inner surface (21).
